# EUROPÄISCHE PATENTSCHRIFT

(11) **EP 3 534 473 B1**
(45) Veröffentlichungstag und Bekanntmachung des Hinweises auf die Patenterteilung: **23.12.2020**
(21) Anmeldenummer: 18159770.9
(22) Anmeldetag: 02.03.2018
(51) Int. Cl.: H02G 3/12, H02G 3/14, H02G 3/16, H04M 1/02, H01R 13/73, H01R 12/72, H04M 1/04, H01R 12/75

(54) **ELEKTRONISCHES INSTALLATIONSGERÄT DER GEBÄUDESYSTEMTECHNIK**
ELECTRONIC INSTALLATION DEVICE FOR BUILDING SYSTEMS ENGINEERING
APPAREIL D'INSTALLATION ÉLECTRONIQUE DE LA TECHNIQUE DES SYSTÈMES DE BÂTIMENTS

(43) Veröffentlichungstag der Anmeldung: 04.09.2019
(73) Patentinhaber: GIRA GIERSIEPEN GmbH & Co. KG, 42477 Radevormwald (DE)
(72) Erfinder: SCHWARZER, Carsten, 42499 Hückeswagen (DE)
(74) Vertreter: Angerhausen, Christoph

(56) Entgegenhaltungen:
- EP-A2- 1 944 836
- EP-A2- 2 477 290
- DE-A1-102005 062 494
- DE-A1-102011 000 448
- DE-A1-102013 105 894
- DE-A1-102015 009 756
- DE-B3-102013 105 893
- DE-U1- 9 214 324
- GB-A- 2 257 573
- GB-A- 2 473 842
- US-A1- 2015 000 972

## Beschreibung

Die Erfindung geht aus von einem elektronischen Installationsgerät der Gebäudesystemtechnik mit einer Montageplatte für die Aufputz-Montage und einem Geräte-Hauptteil für die Montage auf der Montageplatte gemäß dem Oberbegriff des Anspruchs 1. Ein derartiges Installationsgerät ist aus der DE 10 2005 062494 A1 bekannt. Ein ähnliches Unterputz-Installationsgerät beschreiben jeweils auch die DE 10 2011 008 506 B4, die DE 10 2004 016 539 B4, die EP 1 944 836 A2, die DE 10 2013 105 894 A1 und die EP 2 586 279 A1. Zusätzlicher Stand der Technik ist noch in EP 1 944 836 A2 zu finden. Die aus dem Stand der Technik bekannten elektronischen Installationsgeräte sind darauf ausgelegt, dass nach einer ersten Montage des Geräte-Hauptteils auf der Montageplatte das Geräte-Hauptteil in der Regel dauerhaft auf der Montageplatte montiert bleibt. Für die Montage des Geräte-Hauptteils auf der Montageplatte ist es insbesondere vorgesehen, dass in getrennten Montageschritten zunächst eine elektrische Verbindung zwischen dem Hauptteil und der Gebäudeelektronik hergestellt werden muss, wozu die Montageplatte beispielsweise auf einer Unterputzdose montiert sein kann und einen Durchbruch für die Kabelführung durch die Montageplatte hindurch aufweist. In einem darauf folgenden Schritt wird das Geräte-Hauptteil kraftschlüssig mit der Montageplatte verbunden, beispielsweise mit der Montageplatte verschraubt.

Es besteht jedoch ein Bedarf danach, das Geräte-Hauptteil werkzeuglos und mit wenigen Handgriffen von der Montageplatte trennen und bedarfsweise mit dieser wieder verbinden zu können, und zwar elektrisch und mechanisch, beispielsweise, jedoch nicht zwingend, um das Geräte-Hauptteil in einer Wohnung oder einem Gebäude mit sich führen zu können. Das Geräte-Hauptteil kann beispielsweise eine Wohnungsstation einer Türkommunikationsanlage sein. Derartige Wohnungsstationen sind üblicherweise im Eingangsbereich einer Wohnung fest installiert. Damit ein Benutzer jedoch von seinem jeweiligen Aufenthaltsort in der Wohnung oder dem Gebäude über die Türkommunikationsanlage mit einer vor der Wohnungstür stehenden Person kommunizieren kann, ist es wünschenswert, dass er die Wohnungsstation von der Montageplatte abnehmen kann. Vor dem Verlassen der Wohnung kann er dann beispielsweise die Wohnungsstation mit der Montageplatte im Eingangsbereich der Wohnung koppeln.

Es ist daher die Aufgabe der Erfindung, ein elektronisches Installationsgerät der eingangs beschriebenen Art derart weiterzuentwickeln, dass es werkzeuglos von der Montageplatte entfernbar ist und ebenso werkzeuglos mit der Montageplatte wieder verbunden werden kann.

Diese Aufgabe wird durch ein elektronisches Installationsgerät mit den Merkmalen des Anspruchs 1 gelöst. Die abhängigen Ansprüche betreffen jeweils vorteilhafte Ausführungsformen der Erfindung.

Es kann vorgesehen sein, dass das Geräte-Hauptteil über die Anschlussplatine in die mehrpolige Steckerleiste eingehängt ist. Die Steckerleiste kann dazu einen vertikalen und zu seiner Oberseite geöffneten Anschlussplatineneinschubkanal aufweisen, in welchen die Anschlussplatine eingeschoben ist. Die Anschlussplatine kann sich an einer der Montageplatte zugewandten Seite des Geräte-Hauptteils, mit welcher das Geräte-Hauptteil auf die Montageplatte aufgesetzt ist, mit einer freien Einsteckkante vertikal nach unten erstrecken. Die Anschlussplatine kann eine Breite senkrecht zur Einsteckrichtung aufweisen, die einem ersten lichten Öffnungsmaß des Anschlussplatineneinschubkanals der Steckerleiste entspricht. Senkrecht dazu kann die Anschlussplatine eine Dicke aufweisen, die einem zweiten lichten Öffnungsmaß des Anschlussplatineneinschubkanals der Steckerleiste entspricht. Wenn das Geräte-Hauptteil über die in die Steckerleiste hineinragende Anschlussplatine eingehängt ist, kann die Anschlussplatine über einen Reibschluss in dem Anschlussplatineneinschubkanals der Steckerleiste gehalten sein, um ein unbeabsichtigtes Herausheben der Geräte-Hauptteils aus der Steckerleiste zu verhindern. In einer Rastposition des Geräte-Hauptteils auf der Montageplatte, in der die Anschlussplatine um eine maximale Einstecktiefe in den Anschlussplatineneinschubkanal eingeschoben ist, ist das Geräte-Hauptteil auf der Montageplatte verrastet, wobei das Geräte-Hauptteil relativ zu der Montageplatte und entgegen der Einschubrichtung der Anschlussplatine in den Anschlussplatineneinschubkanal nur dann verschieblich ist, wenn entsprechende Rastmittel, insbesondere komplementäre Rasthaken, gelöst werden.

Die Montageplatte kann erste Befestigungsmittel für die Aufputz-Montage und zweite Befestigungsmittel für die Befestigung der Montageplatte an einem Tischaufsteller aufweisen. Die ersten Befestigungsmittel können flexible Anschraublaschen sein, um Unebenheiten des Installationsuntergrundes ausgleichen zu können.

Das Geräte-Hauptteil kann eine Hauptplatine aufweisen, die über Federkontaktstifte mit der Anschlussplatine kontaktiert sind. Die Federkontaktstifte können als so genannte Pogo-Pins ausgebildet sein. Auf der Hauptplatine können die Hauptfunktionen des elektronischen Installationsgeräts realisiert sein, beispielsweise Elektronik für den Kommunikationsaufbau mit einer Türsprecheinheit, Ansteuerelektronik für ein Display, eine Sprachausgabe, ein Mikrophon und dergleichen.

Die Anschlussplatine kann parallel beabstandet zu der Hauptplatine angeordnet sein. Insbesondere kann die Anschlussplatine relativ zu der Hauptplatine verkippbar sein. Über Federkontaktstifte beziehungsweise Pogo-Pins kann ein variierender Abstand zwischen der Anschlussplatine und der Hauptplatine im Zuge des Verkippens ausgeglichen werden. Die Anschlussplatine kann um eine Achse verkippbar sein, die in der Ebene der Anschlussplatine liegt. Mit diesen Maßnahmen kann erreicht werden, dass Verspannungen durch eine unsaubere Installation nicht auf die Hauptplatine übertragen werden.

Die Anschlussplatine und deren Leiterbahnen erstrecken sich parallel zu der Montageplatte, wobei Kontaktelemente der Steckerleiste in mindestens einem Anschlussplatineneinschubkanal der Steckerleiste aufgenommen sind und sich eine Einschubrichtung des Anschlussplatineneinschubkanals parallel zu der Montageplatte erstreckt. Die Leiterbahnen können sich insbesondere in Vertikalrichtung und parallel voneinander beabstandet erstrecken. Die Einschubrichtung soll sich insbesondere in Vertikalrichtung nach unten oder im Wesentlichen in Vertikalrichtung nach unten erstrecken.

Die Montageplatte und das Geräte-Hauptteil können über lösbare Befestigungsmittel, insbesondere über komplementäre Rasthaken aneinander festgelegt sein. Die komplementären Rasthaken können eine Rastposition einnehmen, in der sie miteinander verrastet sind, wenn die Anschlussplatine und deren Leiterbahnen über die Steckerleiste kontaktiert sind. In der Rastposition der komplementären Rasthaken zueinander können das Geräte-Hauptteil und die Montageplatte zueinander unverrückbar aneinander festgelegt sein.

Das Geräte-Hauptteil und die Montageplatte können in einer Montageposition, in der das Geräte-Hauptteil auf der Montageplatte aufliegt, zwischen einer Verriegelungsposition, in der das Geräte-Hauptteil an der Montageplatte festgelegt ist, und einer Freigabeposition, in der das Geräte-Hauptteil aus der Montageposition von der Montageplatte abhebbar ist, gegeneinander verschieblich sein.

In der Verriegelungsposition kann die Steckerleiste mit der Anschlussplatine kontaktiert und in der Freigabeposition von der Anschlussplatine dekontaktiert sein. In der Verriegelungsposition von Geräte-Hauptteil und Montageplatte können sich die komplementären Rasthaken in ihrer Rastposition befinden.

Das Geräte-Hauptteil weist an einer der Montageplatte zugewandten Seite eine Ausnehmung auf, in die sich die Anschlussplatine mit freiliegenden elektrischen Kontakten der Leiterbahnen hinein erstreckt. Die Steckerleiste ist dabei in einer Montageposition des elektronischen Installationsgeräts in der Ausnehmung angeordnet. In der Montageposition liegt das Geräte-Hauptteil auf der Montageplatte auf und es ist zwischen einer Verriegelungsposition, in der das Geräte-Hauptteil an der Montageplatte festgelegt ist, und einer Freigabeposition, in der das Geräte-Hauptteil aus der Montageposition von der Montageplatte abhebbar ist, gegenüber der Montageplatte verschieblich.

Die Montageplatte kann an einer dem Geräte-Hauptteil zugewandten Seite einen Kabelstauraum aufweisen, in den ein Durchbruch durch die Montageplatte mündet, wobei die Steckerleiste auf der Montageplatte angeordnet ist und mit einer Kabelanschlussseite in den Kabelstauraum mündet oder dem Kabelstauraum zugewandt angeordnet ist.

Das Geräte-Hauptteil kann an einer der Montageplatte zugewandten Seite einen zu dem Kabelstauraum der Montageplatte komplementären Kabelstauraum aufweisen. Das Geräte-Hauptteil kann an einer der Montageplatte zugewandten Seite eine Ausnehmung aufweisen, in die sich die Anschlussplatine mit elektrischen Kontakten der Leiterbahnen hinein erstreckt und die in den zu dem Kabelstauraum der Montageplatte komplementären Stauraum mündet.

Die Montageplatte kann gegenüberliegende und vorzugsweise gerade Außenkanten und das Geräte-Hauptteil an einer der Montageplatte zugewandten Seite eine Aufnahme für die Montageplatte mit zu den Außenkanten komplementären gegenüber liegenden und vorzugsweise geraden Innenkanten aufweisen, wobei die Aufnahme eine Abmessung in Richtung ihrer Längskanten aufweist, die größer als eine maximale Abmessung der Außenkanten ist, so dass das Geräte-Hauptteil in einer Montageposition, in der das Geräte-Hauptteil auf der Montageplatte aufliegt und die Außenkanten an den Innenkanten anliegen, ausschließlich entlang der Außen- und Innenkanten gegenüber der Montageplatte verschieblich ist.

Das Geräte-Hauptteil und die Montageplatte können in Vertikalrichtung gegeneinander verschieblich sein, wobei das Geräte-Hauptteil und die Montageplatte eine Verriegelungsposition einnehmen, in der das Geräte-Hauptteil an der Montageplatte festgelegt ist, wenn das Geräte-Hauptteil relativ zu der Montageplatte eine in Vertikalrichtung untere Position einnimmt, und wobei das Geräte-Hauptteil und die Montageplatte eine Freigabeposition einnehmen, in der das Geräte-Hauptteil von der Montageplatte abhebbar ist, wenn das Geräte-Hauptteil relativ zu der Montageplatte eine in Vertikalrichtung obere Position einnimmt, wobei die Steckerleiste in der unteren Position die Anschlussplatine kontaktiert und in der oberen Position von der Anschlussplatine dekontaktiert ist.

Weitere Einzelheiten der Erfindung werden anhand der nachstehenden Figuren erläutert. Dabei zeigt:
- Figur 1: in perspektivischer Darstellung ein Geräte-Hauptteil gemäß einer Ausführungsform der Erfindung mit Blick auf die Montageseite des Geräte-Hauptteils;
- Figur 2: in perspektivischer Darstellung eine Montageplatte gemäß einer Ausführungsform der Erfindung;
- Figur 3: eine Draufsicht auf die Montageplatte gemäß Figur 2;
- Figur 4: eine Detailansicht eines Querschnitts durch ein elektronisches Installationsgerät gemäß einer Ausführungsform der Erfindung bei von der Montageplatte abgehobenem Geräte-Hauptteil;
- Figur 5: die Detailansicht gemäß Figur 4 bei auf der Montageplatte aufgesetztem Geräte-Hauptteil;
- Figur 6: die Detailansicht gemäß Figuren 4 und 5 bei auf der Montageplatte verriegeltem Geräte-Hauptteil;
- Figur 7: eine weitere Detailansicht der Ausführungsform gemäß den Figuren 4 bis 6 im Bereich der Anschlussplatine und der Steckerleiste bei von der Montageplatte abgehobenem Geräte-Hauptteil;
- Figur 8: die Detailansicht gemäß Figur 7 bei auf der Montageplatte aufgesetztem Geräte-Hauptteil;
- Figur 9: die Detailansicht gemäß den Figuren 7 und 8 bei auf der Montageplatte verriegeltem Geräte-Hauptteil; und
- Figur 10: eine weitere Ausführungsform des erfindungsgemäßen elektronischen Installations gerätes.

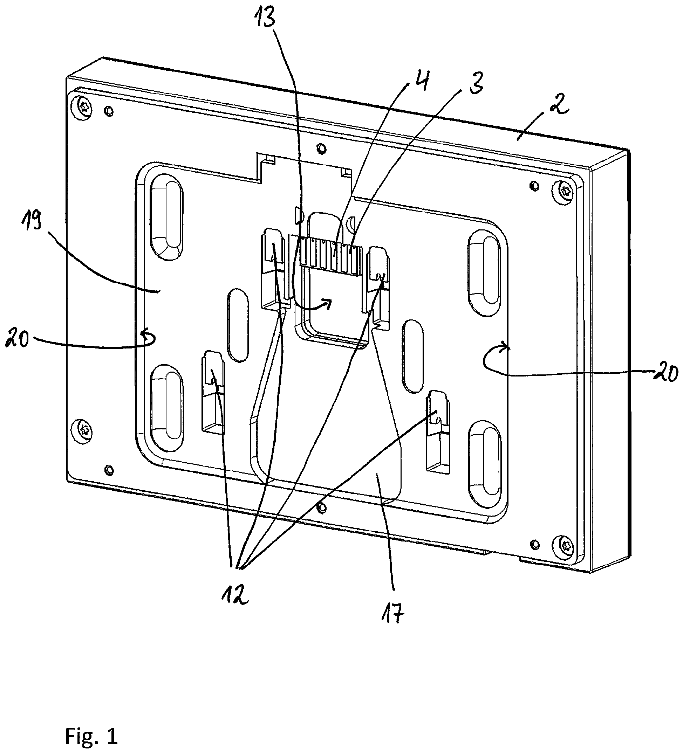

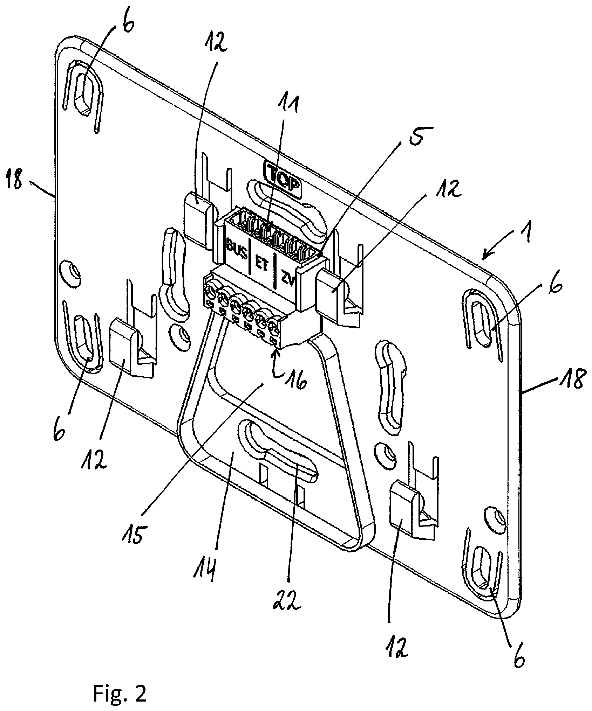

In den Figuren 1 bis 3 ist eine erste Ausführungsform eines erfindungsgemäßen elektronischen Installationsgerätes gezeigt, welches im Wesentlichen aus dem Geräte-Hauptteil 2 und der Montageplatte 1 besteht. Für die mechanische Verriegelung des Geräte-Hauptteils 2 auf der Montageplatte 1 weisen das Geräte-Hauptteil 2 und die Montageplatte 1 komplementäre Rasthaken 12 auf. Ein erstes Paar komplementärer Rasthaken 12 ist an einer der Montageplatte 1 zugewandten Seite des Geräte-Hauptteils 2 der Anschlussplatine 3 an gegenüber liegenden Seiten dieser beigeordnet. Ein weiteres Paar komplementärer Rasthaken 12 ist einem Stauraum 17 des Geräte-Hauptteils 2 an gegenüberliegenden Seiten dieses beigeordnet. Die Montageplatte 1 weist zu den Rasthaken 12 des Geräte-Hauptteils 2 komplementäre Rasthaken 12 auf. Mit Hilfe der Paare aus jeweils komplementären Rasthaken 12 des Geräte-Hauptteils 2 und der Montageplatte 2 kann das Geräte-Hauptteil 2 an der Montageplatte 1 festgelegt werden.

Das Geräte-Hauptteil 2 weist an seiner der Montageplatte 1 zugewandten Seite weiterhin eine Ausnehmung 13 auf, in welche eine Anschlussplatine 3 des Geräte-Hauptteils 2 hineinragt. Die Anschlussplatine 3 erstreckt sich im Wesentlichen in Vertikalrichtung und zeigt mit ihrem freien Ende nach unten, mithin zu einer Unterseite des Geräte-Hauptteils 2. Die Anschlussplatine 3 weist Leiterbahn 4, die sich in Vertikalrichtungen erstrecken. Für die Montage des Geräte-Hauptteils 2 auf der Montageplatte 1 kann die Steckerleiste 5 in demjenigen Teil der Ausnehmung 13 aufgenommen werden, welcher unterhalb der freien Kante der Anschlussplatine 3 zugänglich ist.

Durch Verlagern des Geräte-Hauptteils 2 gegenüber der Montageplatte 2 kann die Anschlussplatine 3 in die Steckerleiste 5 der Montageplatte 1 eingeschoben werden. Insbesondere kann dazu das Geräte-Hauptteil 2 gegenüber der Montageplatte 1 abgesenkt werden. Mit dem Erreichen einer Endposition, in welcher die Anschlussplatine 3 mit ihren Leiterbahn 4 so weit in die Steckerleiste 5 hineinragt, dass die Leiterbahnen 4 der Anschlussplatine 3 über die Steckerleiste 5 kontaktiert sind, nehmen die komplementären Rasthaken 12 ihre Rastposition ein, so dass jeweils gegenüberstehende Rasthaken 12 vom Geräte-Hauptteil 2 und Montageplatte 1 ineinandergreifen und damit das Geräte-Hauptteil 2 an der Montageplatte 1 kraftschlüssig festlegen.

Das Geräte-Hauptteil 2 weist an seiner der Montageplatte 1 zugewandten Seite eine Aufnahme 19 auf, die in Horizontalrichtung eine Abmessung aufweist, die im Wesentlichen der horizontalen Abmessung der Montageplatte 1 entspricht. Insbesondere weist das Geräte-Hauptteil 2 an seiner der Montageplatte 1 zugewandten Seite gegenüberliegende parallele Innenkanten 20 auf, welche die Aufnahme 19 begrenzen und bei auf der Montageplatte 1 aufgesetztem Geräte-Hauptteil 2 an entsprechenden gegenüber liegenden Außenkanten 18 der Montageplatte 1 anliegen. In Richtung der Innenkanten 20 weist die Aufnahme 19 eine Abmessung auf, die größer als eine Abmessung der Montageplatte 1 in Richtung der Außenkanten 18 ist. Dadurch wird erreicht, dass bei auf die Montageplatte 1 aufgesetztem Geräte-Hauptteil 2 das Geräte-Hauptteil 2 gegenüber der Montageplatte 1 entlang der gegenüber liegenden Kanten 18, 20 in Vertikalrichtung verschieblich ist, insbesondere, um zwischen einer Freigabeposition, in welcher die komplementären Rasthaken 12 von Geräte-Hauptteil 2 und Montageplatte 1 nicht ineinander greifen und somit das Geräte-Hauptteil 2 von der Montageplatte 1 abhebbar ist, und einer Verriegelungsposition, in welcher die komplementären Rasthaken 12 von Geräte-Hauptteil 2 und Montageplatte 1 ineinandergreifen, verschoben werden können.

Die Steckerleiste 5 weist eine Kabelanschlussseite 16 auf, welche gegenüberliegend von einem Anschlussplatineneinschubkanal 11 angeordnet ist. Die Kabelanschlussseite 16 mündet in einen Kabelstauraum 14, der einen Durchbruch 15 aufweist. Die Montageplatte 1 kann beispielsweise auf einer Unterputzdose montiert werden, so dass Kabel für den Anschluss an die Steckerleiste aus der Unterputzdose durch den Durchbruch 15 hindurch und über die Kabelanschlussseite 16 mit der Steckerleiste 5 elektrisch kontaktiert werden können. Der Kabelstauraum 14 ist komplementär zu einem weiteren Kabelstauraum 17 an der Innenseite des Geräte-Hauptteils 2 ausgebildet, so dass die komplementären Kabelräume 14, 17 einen Kabelstauraum für die Aufnahme von Kabeln ausbilden, die über die Kabelanschlussseite 16 an die Steckerleiste 5 angeschlossen sind.

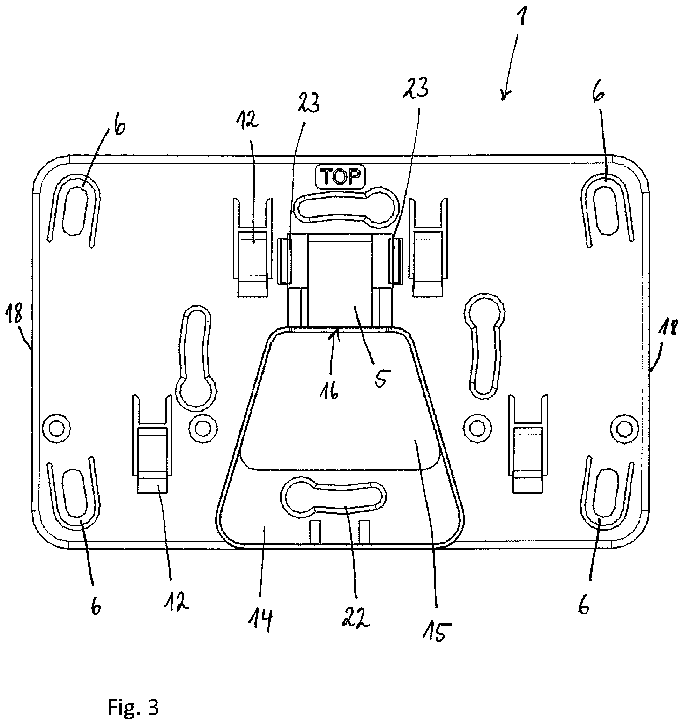

Wie in Figur 3 zu erkennen ist, weist die Steckerleiste 5 an ihren gegenüber liegenden Längsseiten jeweils einen Schnapphaken 23 auf, über den eine Verrastung mit entsprechenden Geometrien an gegenüber liegenden Außenkanten der Ausnehmung 13 hergestellt werden kann, welche der Anschlussplatine 13 beidseitig und gegenüberliegend zugeordnet sind.

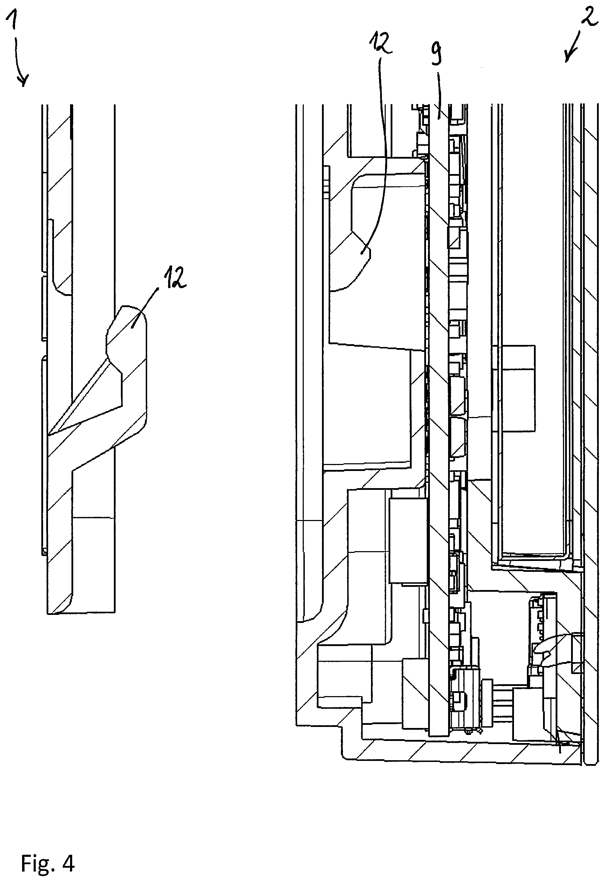

Die Figuren 4 bis 9 veranschaulichen den Verriegelungs- und Kontaktierungsmechanismus des Geräte-Hauptteils 2 auf der Montageplatte 1 gemäß einer Ausführungsform der Erfindung.

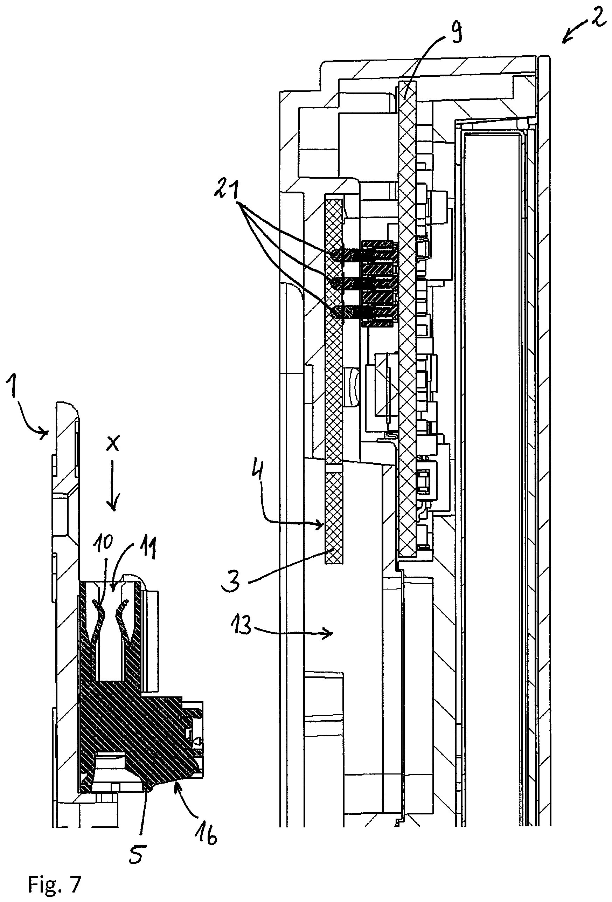

Dabei zeigen die Figuren 4 und 7 das elektronische Installationsgerät im Bereich eines Paars komplementärer Rasthaken 12 (Figur 4) und im Bereich der Anschlussplatine 3 beziehungsweise der Steckerleiste 5 (Figur 7) bei von der Montageplatte 1 abgehobenen Geräte-Hauptteil 2.

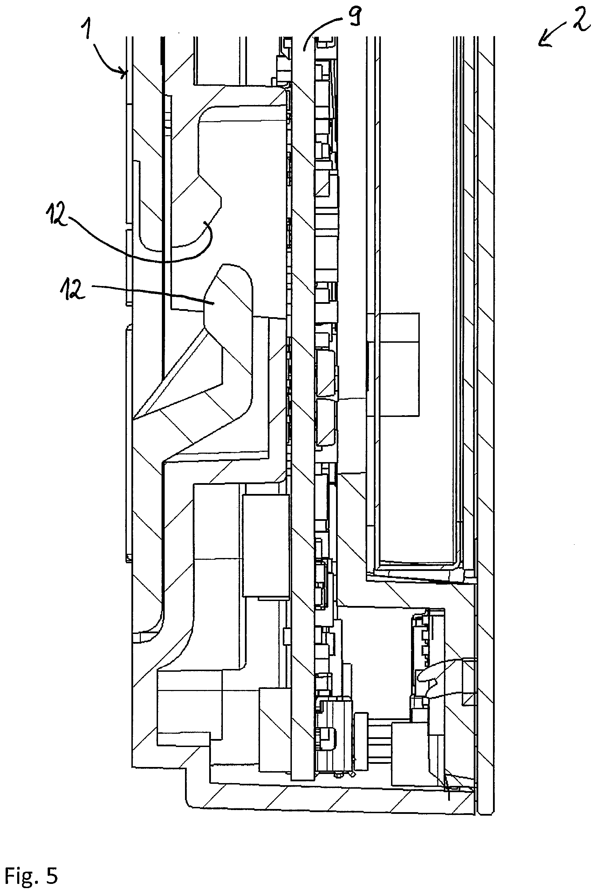

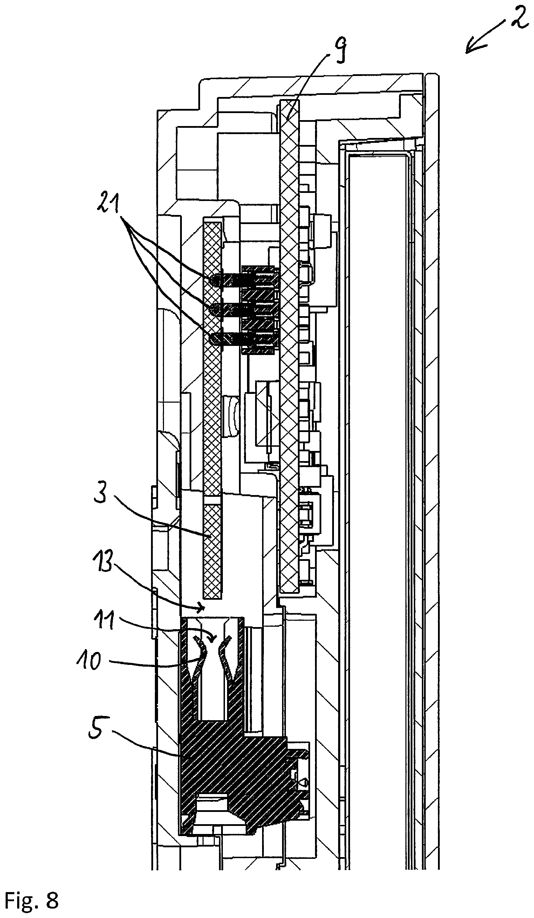

Die Figuren 5 und 8 zeigen entsprechende Detailansichten des elektronischen Installationsgeräts in einer Montageposition, in welcher das Geräte-Hauptteil 2 auf der Montageplatte 1 aufgesetzt und gegenüber der Montageplatte 1 verschieblich, jedoch noch nicht auf der Montageplatte 1 verrastet ist und noch keine elektrische Kontaktierung zwischen der Anschlussplatine 3 und der Steckerleiste 5 hergestellt ist.

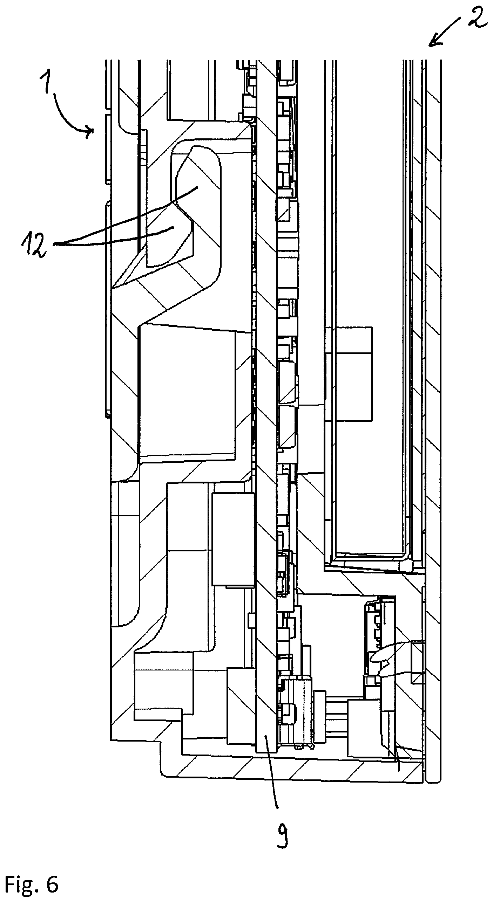

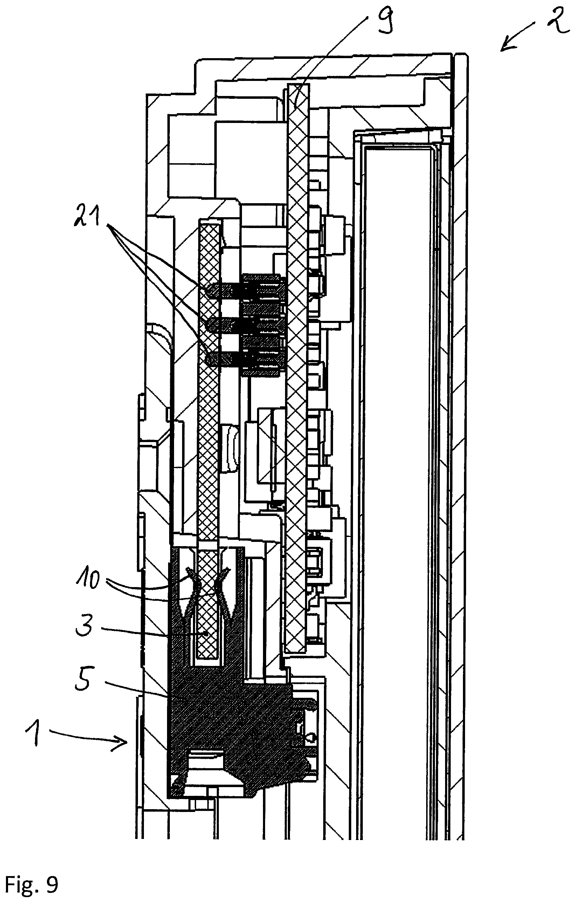

Die Figuren 6 und 9 zeigen schließlich entsprechende Detailansichten des elektronischen Installationsgeräts, bei dem das Geräte-Hauptteil 2 und die Montageplatte 1 in ihrer Verriegelungsposition angeordnet sind, in welcher die komplementären Rasthaken 12 ineinander verrastet und die Anschlussplatine 3 in die Steckerleiste 5 eingeschoben ist, mithin eine elektrische Kontaktierung zwischen der Anschlussplatine 3 und der Steckerleiste 5 hergestellt ist.

Es ist insbesondere zu erkennen, dass für die Verriegelung des Geräte-Hauptteils 2 auf der Montageplatte 1 in einem ersten Schritt das Geräte-Hauptteil 2 derart auf die Montageplatte 1 aufgesetzt wird, dass die Steckerleiste 5 unterhalb von der freien Kante der Anschlussplatine 3 in die Ausnehmung 13 eingeführt werden kann. Daraufhin nehmen die Montageplatte 1 und das Geräte-Hauptteil 2 die Position ein, wie sie in den Figuren 5 und 8 dargestellt ist. Insbesondere sind in dieser Montageposition des Geräte-Hauptteils 2 auf der Montageplatte 1 die freien Enden der komplementären Rasthaken 12 voneinander beabstandet und sich gegenüber stehend zueinander ausgerichtet. Wie in Figur 8 zu erkennen ist, ist zwar die freie Kante der Anschlussplatine 3 bereits zu dem Anschlussplatineneinschubkanal 11 der Steckerleiste 5 ausgerichtet, zwischen diesen ist jedoch ebenfalls noch ein Abstand ausgebildet, so dass die Anschlussplatine 3 noch nicht von der Steckerleiste 5 kontaktiert ist. Für die Kontaktierung der Leiterbahnen (nicht dargestellt) weist die Steckerleiste 5 in ihrem Anschlussplatineneinschubkanal 11 Kontaktklemmen 10 auf, die beispielsweise als Federklemmen ausgebildet sein können.

Die Verriegelungs- und Kontaktierungsposition des Geräte-Hauptteils 2 auf der Montageplatte 1 ist in den Figuren 6 und 9 dargestellt. In dieser Position sind die komplementären Rasthaken 12 ineinander verrastet und die Anschlussplatine 3 ist über die Kontaktklemmen 10 der Steckerleiste 5 kontaktiert. Aus der in Figuren 5 und 8 gezeigten Position ist das Geräte-Hauptteil 2 durch vertikales Verlagern gegenüber der Montageplatte 1 nach unten in Einschubrichtung x in die in den Figuren 6 und 9 gezeigte Position überführbar.

In Figuren 7 bis 9 ist weiterhin zu erkennen, dass das Geräte-Hauptteil 2 in aus dem Stand der Technik bekannter Weise eine Hauptplatine 9 aufweist, auf welcher die wesentlichen Funktionen des Geräte-Hauptteils 2 verwirklicht sind, beispielsweise Elektronik für den Kommunikationsaufbau mit einer Türsprecheinheit, Ansteuerelektronik für ein Display, eine Sprachausgabe oder ein Mikrophon usw. Die Anschlussplatine 3 ist über Federkontaktstifte 21 mit der Hauptplatine 9 elektrisch verbunden. Die Federkontaktstifte 21 können beispielsweise als Pogo-Pins ausgebildet sein. Mit Hilfe der Federkontaktstifte 21 kann die Anschlussplatine 3 gegenüber der Hauptplatine 9 verkippbar an der Hauptplatine 9 kontaktiert sein. Insbesondere kann die Anschlussplatine 3 um eine Drehachse verkippbar sein, die sich senkrecht zur Zeichnungsebene erstreckt. Auf diese Weise wird erreicht, dass eventuelle Verspannungen, welche bei einer unsachgerechten Installation des Geräte-Hauptteils 2 auf der Montageplatte 1 auftreten könnten, nicht auf die Hauptplatine 9 übertragen werden.

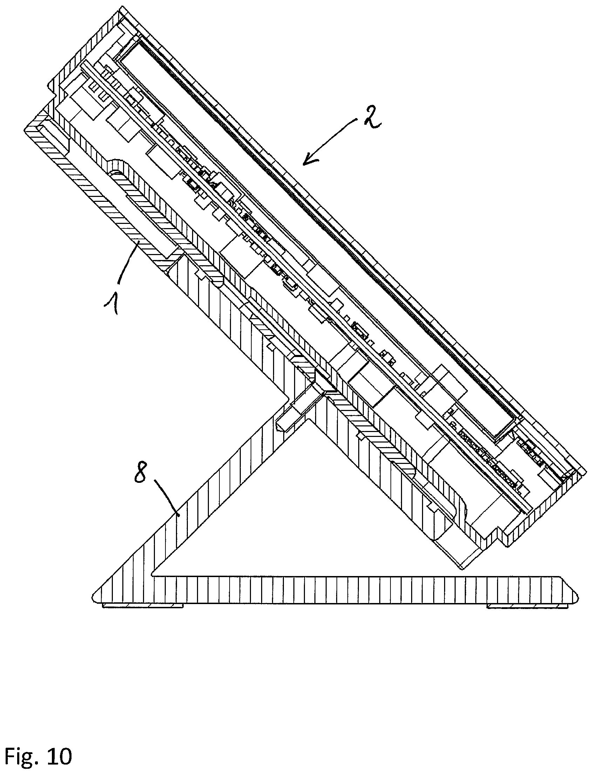

Die Figur 10 zeigt eine Ausführungsform der Erfindung, bei der das elektronische Installationsgerät, bestehend aus Geräte-Hauptteil 2 und Montageplatte 1, über die Montageplatte 1 an einem Tischaufsteller 8 montiert ist.

Insbesondere kann zwischen der Montageplatte 1 und dem Tischaufsteller 8 eine dauerhafte Schraubverbindung hergestellt sein, so dass das Geräte-Hauptteil 2 wahlweise auf der Montageplatte 1 des Tischaufstellers 8 oder einer weiteren Montageplatte 1 verrastet werden kann, die beispielsweise nach Art eines klassischen elektronischen Installationsgeräts Aufputz montiert ist. Wenn das elektronische Installationsgerät beispielsweise eine Wohnungsstation einer Türkommunikationsanlage ist, kann ein Benutzer das Geräte-Hauptteil 2 wahlweise in klassischer Weise, beispielsweise nahe der Eingangstür über die Aufputz montierte Montageplatte 1 an einer Wand befestigen, oder, beispielsweise wenn er sich in einer größeren Wohnung oder einem Gebäude weiter entfernt von der Tür aufhält, die Wohnungsstation auf einer Montageplatte 1 eines Tischaufstellers 8 montieren, der sich in dem Raum befindet, in welchem er sich gerade aufhält.

Das Geräte-Hauptteil 2 kann neben der Anschlussplatine eine Funkschnittstelle aufweisen, die zumindest dann aktiv sein kann, wenn das Geräte-Hauptteil 2 von der Montageplatte 1 demontiert ist. Über die Funkschnittstelle kann das Geräte-Hauptteil 2 mit einem Netzwerk für die Gebäudeautomation, beispielsweise mit einem KNX-Netzwerk, kommunizieren, in welches das elektronische Installationsgerät integriert ist.

Ebenso kann die Montageplatte 1 für die Auputz-Montage über ihre Steckerleiste drahtgebunden an ein Netzwerk für die Türkommunikation für den Datenaustausch gekoppelt sein. Es ist auch denkbar, dass die Montageplatte 1 eine Funkschnittstelle für die Kommunikation mit dem Geräte-Hauptteil 2 aufweist, wenn das Geräte-Hauptteil 2 nicht auf die Montageplatte 1 aufgesetzt ist und folglich keine drahtgebundene Verbindung zwischen Geräte-Hauptteil 2 und Montageplatte 1 hergestellt ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Montageplatte
- 2: Geräte-Hauptteil
- 3: Anschlussplantine
- 4: Leiterbahn
- 5: Steckerleiste
- 6: Erste Befestigungsmittel
- 7: Zweite Befestigungsmittel
- 8: Tischaufsteller
- 9: Hauptplatine
- 10: Kontaktklemme
- 11: Anschlussplatineneinschubkanal
- 12: komplementäre Rasthaken
- 13: Ausnehmung
- 14: Kabelstauraum
- 15: Durchbruch
- 16: Kabelanschlussseite
- 17: Komplementärer Kabelstauraum
- 18: Außenkante
- 19: Aufnahme
- 20: Innenkante
- 21: Federkontaktstift
- 22: Befestigungsloch
- 23: Schnapphaken
- x: Einschubrichtung

## Patentansprüche

1. Elektronisches Installationsgerät der Gebäudesystemtechnik, mit einer Montageplatte (1) für die Aufputz-Montage und einem Geräte-Hauptteil (2) für die Montage auf der Montageplatte (1), wobei die Montageplatte (1) und das Geräte-Hauptteil (2) über eine elektronische Schnittstelle miteinander verbindbar sind, die eine Anschlussplatine (3) mit einer Mehrzahl Leiterbahnen (4) und eine mehrpolige Steckerleiste (5) für die Direktkontaktierung der Anschlussplatine (3) aufweist, wobei die Steckerleiste (5) dazu eingerichtet ist, die Leiterbahnen (4) elektrisch zu kontaktieren, wobei sich die Anschlussplatine (3) und deren Leiterbahnen (4) parallel zu der Montageplatte (1) erstrecken, wobei Kontaktklemmen (10) der Steckerleiste (5) in mindestens einem Anschlussplatineneinschubkanal (11) der Steckerleiste (5) aufgenommen sind und sich eine Einschubrichtung (x) des Anschlussplatineneinschubkanals (11) parallel zu der Montageplatte (1) erstreckt,
wobei das Geräte-Hauptteil (2) an einer der Montageplatte (1) zugewandten Seite eine Ausnehmung (13) aufweist, in die sich die Anschlussplatine (3) mit elektrischen Kontakten der Leiterbahnen (4) hinein erstreckt und in der die Steckerleiste (5) in einer Montageposition des elektronischen Installationsgeräts angeordnet ist, in welcher das Geräte-Hauptteil (2) auf der Montageplatte (1) aufliegt und zwischen einer Verriegelungsposition, in der das Geräte-Hauptteil (2) an der Montageplatte (1) festgelegt ist, und einer Freigabeposition, in der das Geräte-Hauptteil (2) aus der Montageposition von der Montageplatte (1) abhebbar ist, gegeneinander verschieblich sind.

2. Elektronisches Installationsgerät nach Anspruch 1, bei dem die Montageplatte (1) erste Befestigungsmittel (6) für die Aufputz-Montage und zweite Befestigungsmittel (7) für die Befestigung der Montageplatte (1) an einem Tischaufsteller (8) aufweist.

3. Elektronisches Installationsgerät nach Anspruch 1 oder 2, bei dem das Geräte-Hauptteil (2) eine Hauptplatine (9) aufweist, die über Federkontaktstifte (21) mit der Anschlussplatine (3) kontaktiert ist.

4. Elektronisches Installationsgerät nach Anspruch 3, bei dem die Anschlussplatine (3) parallel beabstandet zu der Hauptplatine (9) angeordnet und relativ zu der Hauptplatine (9) verkippbar ist.

5. Elektronisches Installationsgerät nach Anspruch 3 oder 4, bei dem die Anschlussplatine (3) um eine Achse verkippbar ist, die in der Ebene der Anschlussplatine (3) liegt.

6. Elektronisches Installationsgerät nach einem der vorangegangen Ansprüche, bei dem die Montageplatte (1) und das Geräte-Hauptteil (2) über lösbare Befestigungsmittel, insbesondere komplementäre Rasthaken (12), aneinander festgelegt sind.

7. Elektronisches Installationsgerät nach Anspruch 6, bei dem das Geräte-Hauptteil (2) und die Montageplatte (1) in einer Montageposition, in der das Geräte-Hauptteil (2) auf der Montageplatte (1) aufliegt, zwischen einer Verriegelungsposition, in der das Geräte-Hauptteil (2) an der Montageplatte (1) festgelegt ist, und einer Freigabeposition, in der das Geräte-Hauptteil (2) aus der Montageposition von der Montageplatte (1) abhebbar ist, gegeneinander verschieblich sind.

8. Elektronisches Installationsgerät nach Anspruch 7, bei dem in der Verriegelungsposition die Steckerleiste (5) mit der Anschlussplatine (3) kontaktiert und in der Freigabeposition von der Anschlussplatine (3) dekontaktiert ist.

9. Elektronisches Installationsgerät nach einem der vorangegangen Ansprüche, bei dem die Montageplatte (1) an einer dem Geräte-Hauptteil (2) zugewandten Seite einen Kabelstauraum (14) aufweist, in den ein Durchbruch (15) durch die Montageplatte (1) mündet, wobei die Steckerleiste (5) auf der Montageplatte (1) angeordnet ist und mit einer Kabelanschlussseite (16) in den Kabelstauraum (14) mündet oder dem Kabelstauraum (14) zugewandt angeordnet ist.

10. Elektronisches Installationsgerät nach Anspruch 9, bei dem das Geräte-Hauptteil (2) an einer der Montageplatte (1) zugewandten Seite einen zu dem Kabelstauraum (14) der Montageplatte (1) komplementären Kabelstauraum (17) aufweist.

11. Elektronisches Installationsgerät nach Anspruch 10, bei dem das Geräte-Hauptteil (2) an einer der Montageplatte (1) zugewandten Seite eine Ausnehmung (13) aufweist, in die sich die Anschlussplatine (3) mit elektrischen Kontakten der Leiterbahnen (4) hinein erstreckt und die in den zu dem Kabelstauraum (14) der Montageplatte (1) komplementären Kabelstauraum (17) mündet.

12. Elektronisches Installationsgerät nach einem der vorangegangen Ansprüche, bei dem die Montageplatte (1) gegenüber liegende und gerade Außenkanten (18) und das Geräte-Hauptteil (2) an einer der Montageplatte (1) zugewandten Seite eine Aufnahme (19) für die Montageplatte (1) mit zu den Außenkanten (18) komplementären gegenüber liegenden und geraden Innenkanten (20) aufweist, wobei die Aufnahme (19) eine Abmessung in Richtung ihrer Innenkanten (20) aufweist, die größer als eine maximale Abmessung der Montageplatte (1) in Richtung ihrer Außenkanten (18) ist, so dass das Geräte-Hauptteil (2) in einer Montageposition, in der das Geräte-Hauptteil (2) auf der Montageplatte (1) aufliegt und die Außenkanten (18) an den Innenkanten (20) anliegen, ausschließlich entlang der Außen- und Innenkanten (18, 20) gegenüber der Montageplatte (1) verschieblich ist.

13. Elektronisches Installationsgerät nach einem der vorangegangen Ansprüche, bei dem das Geräte-Hauptteil (2) und die Montageplatte (1) in Vertikalrichtung gegeneinander verschieblich sind, wobei das Geräte-Hauptteil (2) und die Montageplatte (1) eine Verriegelungsposition einnehmen, in der das Geräte-Hauptteil (2) an der Montageplatte (1) festgelegt ist, wenn das Geräte-Hauptteil (2) relativ zu der Montageplatte (1) eine in Vertikalrichtung untere Position einnimmt, und wobei das Geräte-Hauptteil (2) und die Montageplatte (1) eine Freigabeposition einnehmen, in der das Geräte-Hauptteil (2) von der Montageplatte (1) abhebbar ist, wenn das Geräte-Hauptteil (2) relativ zu der Montageplatte (1) eine in Vertikalrichtung obere Position einnimmt, wobei die Steckerleiste (5) in der unteren Position die Anschlussplatine (3) kontaktiert und in der oberen Position von der Anschlussplatine (3) dekontaktiert ist.

## Claims

1. An electronic installation device for building system technology, with a mounting plate (1) for surface mounting and a device main part (2) for mounting on the mounting plate (1), wherein the mounting plate (1) and the device main part (2) can be connected to one another via an electronic interface, which has a connection board (3) with a plurality of conductor tracks (4) and a multipole plug strip (5) for direct contacting of the connection board (3), the plug strip (5) being set up to make electrical contact with the conductor tracks (4), wherein the connection board (3) and its conductor tracks (4) extend parallel to the mounting plate (1), contact terminals (10) of the plug strip (5) being accommodated in at least one connection board insertion channel (11) of the plug strip (5) and an insertion direction (x) of the connection board insertion channel (11) extending parallel to the mounting plate (1),
wherein the main part (2) of the device has, on a side facing the mounting plate (1), a recess (13) into which the connection board (3) with electrical contacts of the conductor tracks (4) extends and in which the plug strip (5) is arranged in a mounting position of the electronic installation device, in which the appliance main part (2) rests on the mounting plate (1) and are displaceable relative to one another between a locking position, in which the appliance main part (2) is fixed to the mounting plate (1), and a release position, in which the appliance main part (2) can be lifted off the mounting plate (1) from the mounting position.

2. The electronic installation device according to claim 1, in which the mounting plate (1) has first fastening means (6) for surface mounting and second fastening means (7) for fastening the mounting plate (1) to a table display (8).

3. The electronic installation device according to claim 1 or 2, in which the main part (2) of the device has a main board (9) which is contacted with the connection board (3) via spring contact pins (21).

4. The electronic installation device according to claim 3, in which the connection board (3) is arranged parallel and spaced apart from the main board (9) and can be tilted relative to the main board (9).

5. The electronic installation device according to claim 3 or 4, in which the connection board (3) is tiltable about an axis which lies in the plane of the connection board (3).

6. The electronic installation device according to one of the preceding claims, in which the mounting plate (1) and the main part (2) of the device are fixed to each other by detachable fastening means, in particular complementary locking hooks (12).

7. The electronic installation device according to claim 6, in which the device main part (2) and the mounting plate (1), in a mounting position in which the device main part (2) rests on the mounting plate (1), are displaceable relative to one another between a locking position in which the device main part (2) is fixed to the mounting plate (1) and a release position in which the device main part (2) can be lifted from the mounting plate (1) from the mounting position.

8. The electronic installation device according to claim 7, in which in the locking position the plug strip (5) is in contact with the connection board (3) and in the release position is decontacted from the connection board (3).

9. The electronic installation device according to one of the preceding claims, in which the mounting plate (1) has, on a side facing the main part (2) of the device, a cable storage space (14) into which an opening (15) through the mounting plate (1) opens, the plug strip (5) being arranged on the mounting plate (1) and opening with a cable connection side (16) into the cable storage space (14) or being arranged facing the cable storage space (14).

10. The electronic installation device according to claim 9, in which the main part (2) of the device has a cable storage space (17) on a side facing the mounting plate (1) which is complementary to the cable storage space (14) of the mounting plate (1).

11. The electronic installation device according to claim 10, in which the device main part (2) has a recess (13) on a side facing the mounting plate (1), into which recess (13) the connection board (3) with electrical contacts of the conductor tracks (4) extends and which opens into the cable storage space (17) complementary to the cable storage space (14) of the mounting plate (1).

12. The electronic installation device according to one of the preceding claims, in which the mounting plate (1) has opposite and straight outer edges (18) and the device main part (2) has, on a side facing the mounting plate (1), a receptacle (19) for the mounting plate (1) with opposite and straight inner edges (20) complementary to the outer edges (18), the receptacle (19) having a dimension in the direction of its inner edges (20), which is greater than a maximum dimension of the mounting plate (1) in the direction of its outer edges (18), so that the appliance main part (2), in an assembly position in which the appliance main part (2) rests on the mounting plate (1) and the outer edges (18) abut the inner edges (20), is displaceable relative to the mounting plate (1) exclusively along the outer and inner edges (18, 20).

13. The electronic installation device according to one of the preceding claims, in which the device main part (2) and the mounting plate (1) are displaceable relative to one another in the vertical direction, wherein the device main part (2) and the mounting plate (1) assume a locking position in which the device main part (2) is fixed to the mounting plate (1) when the device main part (2) assumes a position lower in the vertical direction relative to the mounting plate (1), and wherein the appliance main part (2) and the mounting plate (1) assume a release position in which the appliance main part (2) can be lifted off the mounting plate (1) when the appliance main part (2) assumes an upper position in the vertical direction relative to the mounting plate (1), wherein the connector strip (5) contacts the connection board (3) in the lower position and is decontacted from the connection board (3) in the upper position.

## Revendications

1. Appareil d'installation électronique d'un système domotique, avec une plaque de montage (1) pour le montage en saillie et une partie principale d'appareil (2) pour le montage sur la plaque de montage (1), dans lequel la plaque de montage (1) et la partie principale de l'appareil (2) peuvent être reliées entre elles par l'intermédiaire d'une interface électronique, qui comprend une platine de connexion (3) avec une pluralité de pistes conductrices (4) et une barrette de connexion multipolaire (5) pour la mise en contact direct de la platine de connexion (3), dans lequel la barrette de connexion (5) est conçue pour mettre en contact électrique les pistes conductrices, dans lequel la platine de connexion (3) et ses pistes conductrices (4) s'étendent parallèlement à la plaque de montage (1), dans lequel les bornes de contact (10) de la barrette de connexion (5) sont logées dans au moins un canal d'insertion de platine de connexion (11) de la barrette de connexion (5) et une direction d'insertion (x) du canal d'insertion de platine de connexion (11) s'étend parallèlement à la plaque de montage (1),
dans lequel la partie principale de l'appareil (2) comprend, sur son côté orienté vers la plaque de montage (1), un évidement (13) à l'intérieur duquel s'étend la platine de connexion (3) avec des contacts électriques des pistes conductrices (4) et dans lequel est disposée de la barrette de connexion (5) dans une position de montage de l'appareil d'installation électronique, dans laquelle la partie principale de l'appareil (2) repose sur la plaque de montage (1) et peuvent coulisser l'une contre l'autre entre une position de verrouillage, dans laquelle la partie principale de l'appareil (2) est fixé à la plaque de montage (1), et une position de déverrouillage, dans laquelle la partie principale de l'appareil (2) peut être soulevée de la plaque de montage (1) hors de la position de montage.

2. Appareil d'installation électronique selon la revendication 1, dans lequel la plaque de montage (1) comprend des premiers moyens de fixation (6) pour le montage en saillie et des deuxièmes moyens de fixation (7) pour la fixation de la plaque de montage (1) à un présentoir de table (8).

3. Appareil d'installation électronique selon la revendication 1 ou 2, dans lequel la partie principale de l'appareil (2) comprend une platine principale (9) qui est mise en contact par l'intermédiaire de tiges de contact élastiques (21) avec la platine de connexion (3).

4. Appareil d'installation électronique selon la revendication 3, dans lequel la platine de connexion (3) est disposée de manière distante parallèlement à la platine principale (9) et de manière basculante par rapport à la platine principale (9).

5. Appareil d'installation électronique selon la revendication 3 ou 4, dans lequel la platine de connexion (3) est basculante autour d'un axe qui se trouve dans le plan de la platine de connexion (3).

6. Appareil d'installation électronique selon l'une des revendications précédentes, dans lequel la plaque de montage (1) et la partie principale de l'appareil (2) sont fixées l'une à l'autre par l'intermédiaire de moyens de fixation amovibles, plus particulièrement des crochets d'encliquetage (12) complémentaires.

7. Appareil d'installation électronique selon la revendication 6, dans lequel la partie principale de l'appareil (2) et la plaque de montage (1) sont coulissantes l'une contre l'autre, dans la position de montage, dans laquelle la partie principale de l'appareil (2) repose sur la plaque de montage (1), entre une position de verrouillage, dans laquelle la partie principale de l'appareil (2) est fixée à la plaque de montage (1), et une position de déverrouillage, dans laquelle la partie principale de l'appareil (2) peut être soulevée de la plaque de montage (1) hors de la position de montage.

8. Appareil d'installation électronique selon la revendication 7, dans lequel, dans la position de verrouillage, la barrette de connexion (5) est mise en contact avec la platine de connexion (3) et, dans la position de déverrouillage, elle est déconnectée de la platine de connexion (3).

9. Appareil d'installation électronique selon l'une des revendications précédentes, dans lequel la plaque de montage (1) comprend, sur un côté orienté vers la partie principale de l'appareil (2), un compartiment de stockage de câbles (14) dans lequel débouche un passage (15) à travers la plaque de montage (1), dans lequel la barrette de connexion (5) est disposée sur la plaque de montage (1) et débouche, dans un côté de connexion de câble (16), dans le compartiment de stockage de câbles (14) ou est disposée de manière orientée vers le compartiment de stockage de câbles (14).

10. Appareil d'installation électronique selon la revendication 9, dans lequel la partie principale de l'appareil (2) comprend, sur un côté orienté vers la plaque de montage (1), un compartiment de stockage de câbles (17) complémentaire du compartiment de stockage de câbles (14) de la plaque de montage (1).

11. Appareil d'installation électronique selon la revendication 10, dans lequel la partie principale de l'appareil (2) comprend, sur un côté orienté vers la plaque de montage (1), un évidement (13) à l'intérieur duquel s'étend la platine de connexion (3) avec les contacts électriques des pistes conductrices (4) et qui débouche dans le compartiment de stockage de câbles (17) complémentaire du compartiment de stockage de câble (14) de la plaque de montage (1).

12. Appareil d'installation électronique selon l'une des revendications précédentes, dans lequel la plaque de montage (1) comprend des arêtes externes opposées et droites (18) et la partie principale de l'appareil (2) comprend, sur un côté orienté vers la plaque de montage (1), un logement (19) pour la plaque de montage (1) avec des arêtes internes opposées et droites (20) complémentaires des arêtes externes (18), dans lequel le logement (19) présente une dimension dans la direction de ses arêtes internes (20) qui est supérieure à une dimension maximale de la plaque de montage (1) dans la direction de ses arêtes externes (18), de façon à ce que la partie principale de l'appareil (2), dans une position de montage dans laquelle la partie principale de l'appareil (2) repose sur la plaque de montage (1) et les arêtes externes (18) s'appuient contre les arêtes internes (20), soit coulissante exclusivement le long des arêtes externes et internes (18, 20) par rapport à la plaque de montage (1).

13. Appareil d'installation électronique selon l'une des revendications précédentes, dans lequel la partie principale de l'appareil (2) et la plaque de montage (1) sont coulissantes l'une contre l'autre dans la direction verticale, dans lequel la partie principale de l'appareil (2) et la plaque de montage (1) adoptent une position de verrouillage dans laquelle la partie principale de l'appareil (2) est fixée à la plaque de montage (1), lorsque la partie principale de l'appareil (2) adopte, par rapport à la plaque de montage (1), une position inférieure dans la direction verticale et dans lequel la partie principale de l'appareil (2) et la plaque de montage (1) adoptent une position de déverrouillage dans laquelle la partie principale de l'appareil (2) peut être soulevée de la plaque de montage (1), lorsque la partie principale de l'appareil (2) adopte, par rapport à la plaque de montage (1), une position supérieure dans la direction verticale, dans lequel la barrette de connexion (5) est mise en contact avec la platine de connexion (3) dans la position inférieure et est déconnectée de la platine de connexion (3) dans la position supérieure.
